# EUROPEAN PATENT APPLICATION

(11) **EP 4 560 413 A1**
(43) Date of publication of application: **28.05.2025**
(21) Application number: 24199309.6
(22) Date of filing: 20.09.2024
(51) Int. Cl.: G04F 5/02, G09B 15/00, G10H 1/40

(54) **DISPLAY CONTROL DEVICE, DISPLAY DEVICE, METHOD, AND STORAGE MEDIUM**

(30) Priority: 21.09.2023 JP 2023154095
(71) Applicant: Casio Computer Co., Ltd., Tokyo 151-8543 (JP)
(72) Inventor: AIHARA, Yumi, Tokyo, 205-8555 (JP); OKANO, Shingo, Tokyo, 205-8555 (JP); KAJIKAWA, Tomoya, Tokyo, 205-8555 (JP); MORIYAMA, Osamu, Tokyo, 205-8555 (JP); ITO, Takuma, Tokyo, 205-8555 (JP)
(74) Representative: Plougmann Vingtoft a/s

(57) **Abstract**

A display control device 1 includes: a controller 10S that controls a light source unit 162, wherein the controller 10S: changes a display position of light such that the light emitted from the light source unit 162 and projected on a display section 166 repeatedly reciprocates on a predetermined track on the display section 166 according to a beat timing, and stops the display position of the light at positions corresponding to both ends of the track during a certain period including the beat timing.

## Description

### REFERENCE TO RELATED APPLICATIONS

This application claims priority based on Japanese Patent Application No. 2023-154095 filed in Japan on September 21, 2023, the entire contents of which are incorporated herein.

### Field

The present disclosure relates to a display control device, a display device, a method, and a storage medium.

### Background

There is known an electronic metronome that visually shows a beat or a tempo to a user by using light. A specific configuration of this type of electron metronome is described in, for example, JP 2000-88977 A.

The electronic metronome described in JP 2000-88977 A turns on one of a plurality of light emitting diodes (LEDs) arranged in a horizontal row. In the electronic metronome, the LED to be turned on is shifted one by one from left to right in a forward direction, and the LED to be turned on is shifted one by one from right to left in a reverse direction. By repeating the shift, a light display position repeatedly reciprocates, so that movement of a pendulum metronome is reproduced.

### SUMMARY OF THE INVENTION

Unlike the pendulum metronome in which a physical bar is moved, in the electronic metronome, a movement range of light may be difficult to perceive due to a design of a display section on which light is projected. In a case where the movement range of the light is difficult to perceive (that is, it is difficult to perceive how far the light moves), it is difficult for the user to grasp a beat timing.

The present disclosure has been made in view of the above circumstances, and an object of the present disclosure is to provide a display control device, a display device, a method, and a program that allow a user to easily grasp a beat timing.

A display control device according to the present disclosure includes a controller that controls a light source unit. The controller changes a display position of light such that the light emitted from the light source unit and projected on a display section repeatedly reciprocates on a predetermined track on the display section according to a beat timing, and stops the display position of the light at positions corresponding to both ends of the track during a certain period including the beat timing.

According to the present disclosure, it is possible to provide a display control device, a display device, a method, and a program that allow a user to easily grasp a beat timing.

### BRIEF DESCRIPTION OF THE DRAWINGS

FIG. 1 is an overall perspective view of an electronic musical instrument according to an embodiment of the present disclosure;
FIG. 2 is a partial perspective view of the electronic musical instrument according to an embodiment of the present disclosure;
FIG. 3 is a block diagram illustrating a configuration of the electronic musical instrument according to an embodiment of the present disclosure;
FIG. 4 is an exploded perspective view of a display unit included in the electronic musical instrument according to an embodiment of the present disclosure;
FIG. 5 is an explanatory diagram in a case where the display unit operates as an electronic metronome in an embodiment of the present disclosure;
FIG. 6 is an explanatory diagram in a case where the display unit operates as the electronic metronome in an embodiment of the present disclosure;
FIG. 7 is a diagram illustrating a relationship between a display position of light projected on a display section and a time in an embodiment of the present disclosure;
FIG. 8 is a diagram illustrating a relationship between a stop time of the light projected on the display portion and a tempo in an embodiment of the present disclosure; and
FIG. 9 is a flowchart illustrating metronome processing executed by a sub processor included in the electronic musical instrument according to an embodiment of the present disclosure.

### DETAILED DESCRIPTION

A display control device, a display device, and a method and a program executed by the display device that is an example of a computer according to an embodiment of the present invention will be described in detail with reference to the drawings.

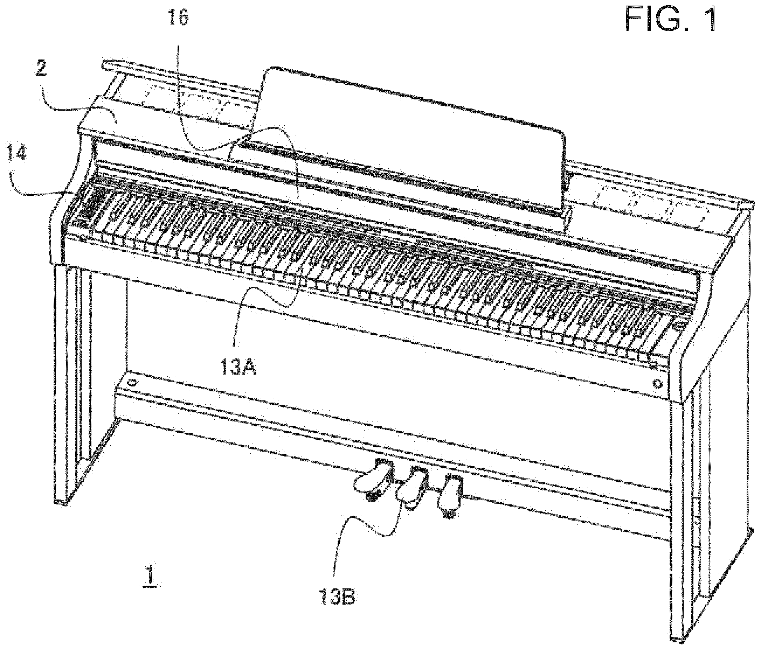

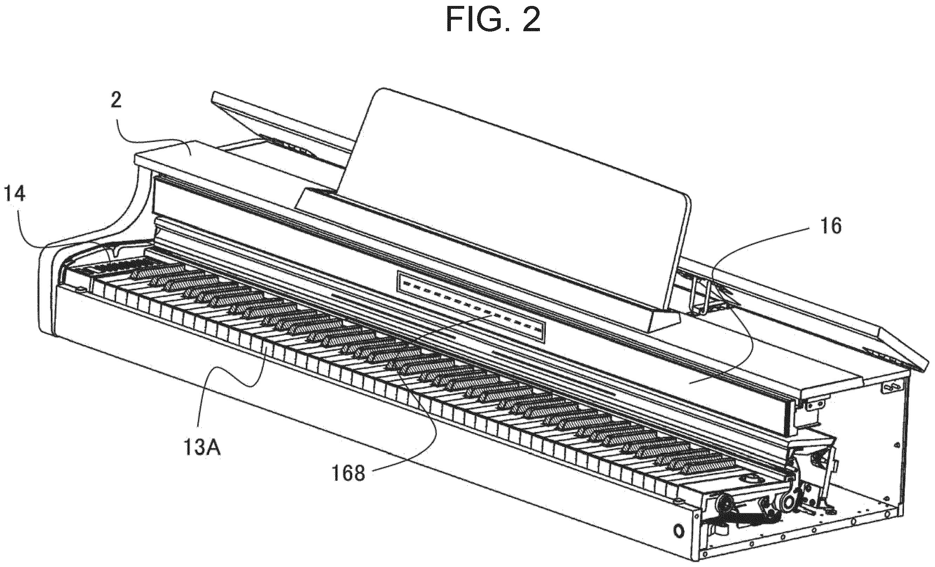

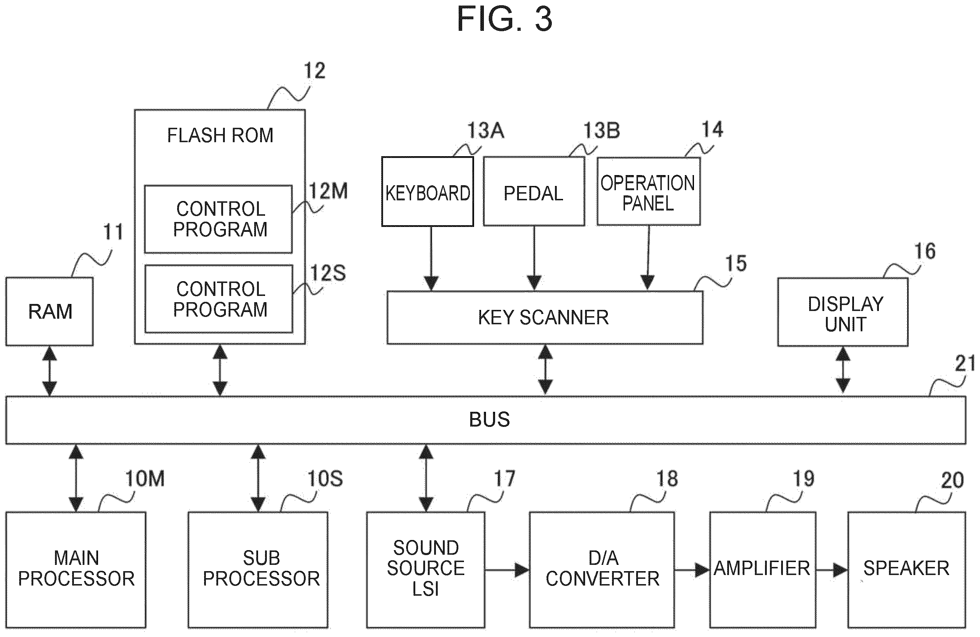

FIG. 1 is an overall perspective view of an electronic musical instrument 1 according to an embodiment of the present invention. FIG. 2 is a partial perspective view of the electronic musical instrument 1. FIG. 3 is a block diagram illustrating a configuration of the electronic musical instrument 1.

The electronic musical instrument 1 is an example of a display device including a display control device, and is, for example, an electronic piano.

The display control device according to the present embodiment includes a controller that controls a light source unit. The controller changes a display position of light such that the light emitted from the light source unit and projected on the display section repeatedly reciprocates on a predetermined track on the display section according to a beat timing, and stops the display position of the light at positions corresponding to both ends of the track during a certain period including the beat timing.

That is, the display control device according to the present embodiment operates as an electronic metronome that visually shows a beat and a tempo to a user by using light. In the display control device according to the present embodiment, the display position of the light is stopped at the positions corresponding to both ends of the track during a certain period including the beat timing, so that the user can easily grasp a movement range of the light (particularly, ends of the movement range). The user can easily grasp the beat timing by visually perceiving that the display position of the light is stopped (in other words, the light has reached the ends of the movement range).

The electronic musical instrument 1 may be an electronic keyboard instrument other than an electronic piano, such as an electronic keyboard. The electronic musical instrument 1 may be another form of electronic musical instrument such as an electronic percussion instrument, an electronic wind instrument, or an electronic string instrument.

As illustrated in FIGS. 1 and 2, the electronic musical instrument 1 includes a housing 2. The housing 2 supports a keyboard 13A, a pedal 13B, an operation panel 14, and a display unit 16.

As illustrated in FIG. 3, the electronic musical instrument 1 includes a main processor 10M, a sub processor 10S, a random access memory (RAM) 11, a flash read only memory (ROM) 12, the keyboard 13A, the pedal 13B, the operation panel 14, a key scanner 15, the display unit 16, a sound source large scale integration (LSI) 17, a D/A converter 18, an amplifier 19, and a speaker 20. Each unit of the electronic musical instrument 1 is connected by a bus 21.

Each of the main processor 10M and the sub processor 10S reads a program and data stored in the flash ROM 12, respectively. The main processor 10M and the sub processor 10S control the electronic musical instrument 1 by using the RAM 11 as a work area.

Each of the main processor 10M and the sub processor 10S is, for example, a single processor or a multiprocessor, and includes at least one processor. In the case of a configuration including a plurality of processors, each of the main processor 10M and the sub processor 10S may be packaged as a single device, or may be configured by a plurality of devices physically separated in the electronic musical instrument 1. The main processor 10M and the sub processor 10S may be referred to as, for example, a controller, a central processing unit (CPU), a micro processor unit (MPU), or a micro controller unit (MCU).

The main processor 10M and the sub processor 10S may be a single processor instead of separate processors.

The RAM 11 temporarily holds data and a program. The RAM 11 holds various programs and various data such as waveform data read from the flash ROM 12.

The flash ROM 12 is a nonvolatile semiconductor memory such as a flash memory, an erasable programmable ROM (EPROM), or an electrically erasable programmable ROM (EEPROM). The flash ROM 12 stores, for example, control programs 12M and 12S. The main processor 10M and the sub processor 10S execute the control programs 12M and 12S, respectively, so that various types of processing according to an embodiment of the present invention are executed.

The keyboard 13A includes a plurality of white keys and a plurality of black keys. Each key is associated with a different pitch. The electronic musical instrument 1 produces a musical sound according to a key pressing operation on a key included in the keyboard 13A.

The pedal 13B includes three pedals which are performance operation elements. Specifically, the pedal 13B includes a damper pedal, a soft pedal, and a sostenuto pedal. When the user performs the key pressing operation on a key while stepping on a pedal, the electronic musical instrument 1 performs sound production processing by adding an acoustic effect associated with the pedal being stepped on to the musical sound.

The operation panel 14 includes various operation units such as a power switch and a metronome function setting switch.

The key scanner 15 monitors key pressing and key release on the keyboard 13A. For example, when detecting a key pressing operation performed by the user, the key scanner 15 outputs a key pressing event to the main processor 10M. The key pressing event includes information (key number) regarding a pitch of a key related to the key pressing operation. The key number may also be referred to as a number of a key, a musical instrument digital interface (MIDI) key, or a note number.

In the present embodiment, means for measuring a key pressing velocity is separately provided, and the velocity measured by the means is also included in the key pressing event. Exemplarily, a plurality of contact switches are provided for each key. The velocity is measured by a difference in time during which each contact switch is conducted when the key is pressed. The velocity can be said to be a value indicating a strength of the key pressing operation or a value indicating a loudness (volume) of the musical sound.

The display unit 16 operates as the electronic metronome that visually shows a beat or tempo to the user by using light. The display unit 16 will be specifically described below.

The waveform data is stored in the flash ROM 12 or another memory (not illustrated). The waveform data is loaded into the RAM 11 at the time of activation processing for the electronic musical instrument 1 so that a musical sound is promptly produced in response to a key pressing operation. When the key scanner 15 detects a key pressing operation, the main processor 10M instructs the sound source LSI 17 to read the corresponding waveform data from the waveform data loaded in the RAM 11. The waveform data to be read is determined according to, for example, a tone selected by a user operation and the key pressing event.

The sound source LSI 17 generates a musical sound based on the waveform data read from the RAM 11 under an instruction of the main processor 10M. The sound source LSI 17 includes, for example, 128 generator sections, and can simultaneously produce up to 128 musical sounds. In the present embodiment, the main processor 10M, the sub processor 10S, and the sound source LSI 17 are configured as separate processors, but in another embodiment, the main processor 10M, the sub processor 10S, and the sound source LSI 17 may be configured as one or two processors.

Digital musical sound data generated by the sound source LSI 17 is converted into an analog signal by the D/A converter 18, then amplified by the amplifier 19, and output to the speaker 20.

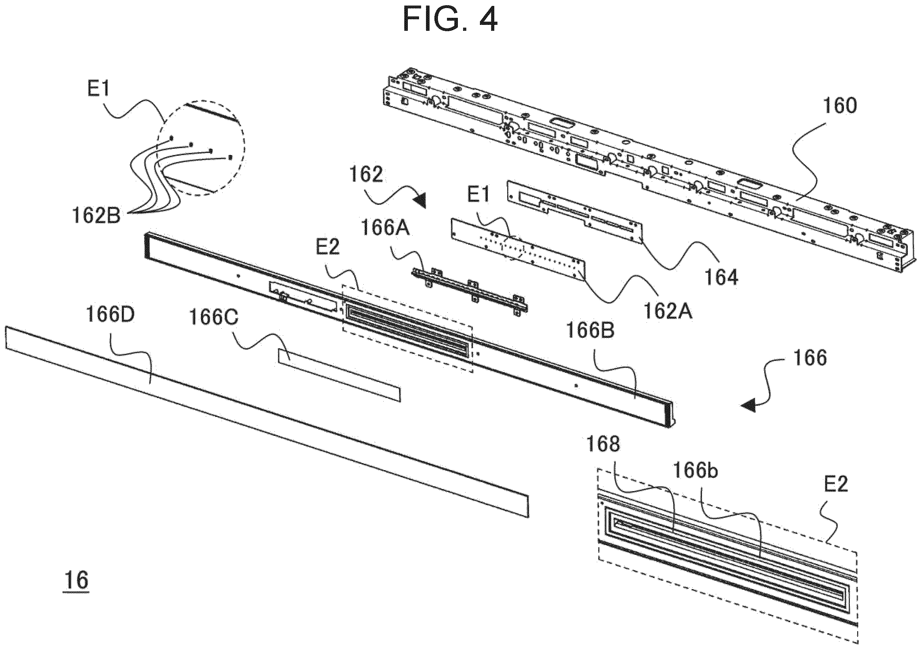

FIG. 4 is an exploded perspective view of the display unit 16. As illustrated in FIG. 4, the display unit 16 includes a sheet metal member 160, a light source unit 162, an insulating sheet 164, and a display section 166.

The sheet metal member 160 is supported inside the housing 2. Each part of the display unit 16 is supported by the housing 2 via the sheet metal member 160.

The light source unit 162 includes a light emitting diode (LED) substrate 162A and LEDs 162B.

The LED substrate 162A is a rectangular substrate. The plurality of LEDs (an example of light emitting elements) 162B are attached to the LED substrate 162A. In the present embodiment, 20 LEDs 162B are arranged in a row at equal intervals in a longitudinal direction (for convenience, referred to as a "left-right direction") of the LED substrate 162A. The LED 162B is, for example, a white LED that emits pseudo white light.

The insulating sheet 164 is a rectangular sheet member having a shape corresponding to the LED substrate 162A and a size slightly larger than that of the LED substrate 162A, and has an insulating property. The insulating sheet 164 is sandwiched between the sheet metal member 160 and the LED substrate 162A to prevent a short circuit between the sheet metal member 160 and the LED substrate 162A.

The display section 166 includes a light guide member 166A, a light shielding case 166B, a diffusion sheet 166C, and an acrylic panel 166D.

The light guide member 166A is made of, for example, polycarbonate or acryl having translucency. The light guide member 166A is assembled to the light shielding case 166B. The light guide member 166A is positioned in front of each LED 162B in a state of being assembled to the light shielding case 166B. The light guide member 166A guides light emitted from the LED 162B forward.

The light shielding case 166B is made of black polystyrene, for example, and has a light shielding property. The light shielding case 166B is formed in a rectangular shape elongated in the left-right direction. An emission opening 166b is formed substantially at the center of the light shielding case 166B. The emission opening 166b has a rectangular shape elongated in the left-right direction.

The light emitted from the LED 162B is projected on the display section 166. That is, the display section 166 shows the light emitted from the light source unit 162.

Specifically, most of the light emitted from the LED 162B is incident on the light guide member 166A. A part of the light incident on the light guide member 166A travels substantially straight inside the light guide member 166A and is emitted from the light guide member 166A.

An emission surface of the light guide member 166A is textured. Therefore, light reaching the emission surface of the light guide member 166A is irregularly reflected by the textured emission surface, and is emitted from the emission surface with high efficiency.

The diffusion sheet 166C is made of, for example, polyethylene terephthalate (PET), and has a light diffusing property. The light emitted from the light guide member 166A is diffused by the diffusion sheet 166C, and is emitted from the light shielding case 166B forward from the emission opening 166b with a substantially uniform luminance.

The acrylic panel 166D is attached to a front surface of the light shielding case 166B. Light diffused by the diffusion sheet 166C and emitted from the light shielding case 166B is emitted to the outside through the acrylic panel 166D.

The light emitted from the light guide member 166A is blocked by the light shielding case 166B at a portion other than the emission opening 166b. That is, only a rectangular region elongated in the left-right direction and defined by the emission opening 166b is a display region (hereinafter, denoted by reference sign 168) in which the light can be projected. Hereinafter, the light projected in the display region 168 is referred to as "light L".

The display region 168 (in other words, the emission opening 166b) is positioned in front of the 20 LEDs 162B arranged in a row in the left-right direction. In FIG. 2, the LED 162B is illustrated for convenience of clearly indicating a positional relationship between the display region 168 and each LED 162B. The LED 162B is positioned behind the acrylic panel 166D, the diffusion sheet 166C, and the light guide member 166A. Therefore, the LEDs 162B are substantially invisible in appearance.

Specifically, each part of the display section 166 is housed in the housing 2, and the acrylic panel 166D has a flat exterior surface as illustrated in FIG. 1. In addition, external light hardly reaches the inside of the housing 2 due to the light shielding case 166B positioned on a back side of the acrylic panel 166D. Therefore, it is difficult for the user to visually recognize each part in the housing 2.

That is, the user cannot visually recognize a position of the LED 162B even when viewing a portion where the LED 162B is disposed. Therefore, when the LED 162B is in a turned-off state, the user cannot grasp a movement range of the light L (particularly, ends of the movement range).

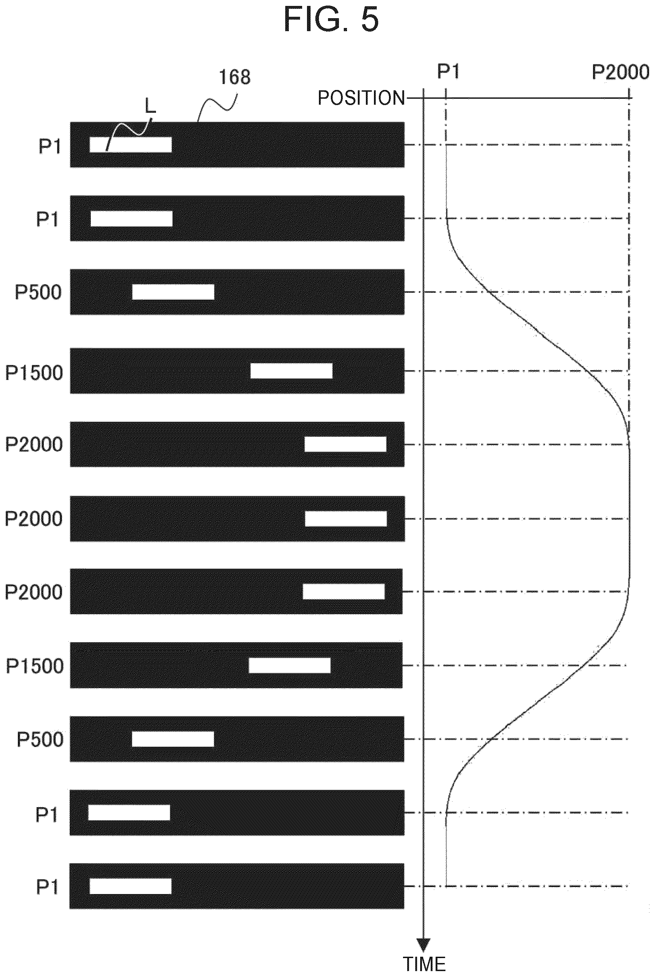

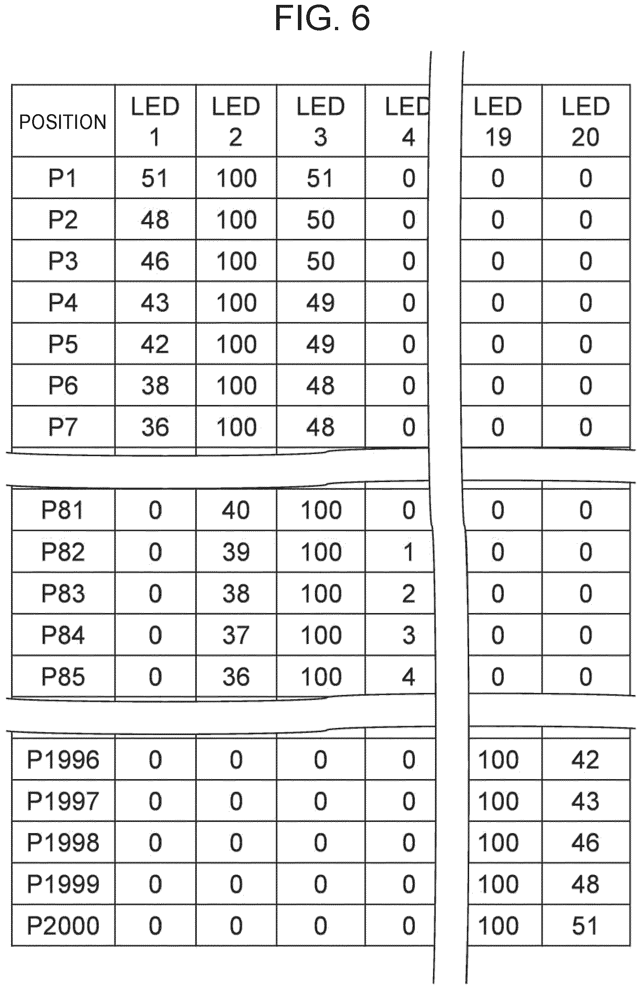

FIGS. 5 and 6 are explanatory diagrams in a case where the display unit 16 operates as the electronic metronome.

FIG. 5 illustrates a change of a display position of the light L projected in the display region 168 on a time axis. In FIG. 5, the left drawing illustrates a state in which the light L reciprocates once in the display region 168. In FIG. 5, the graph on the right side corresponds to the left drawing and shows a relationship between the display position of the light L and time.

As illustrated in FIG. 5, the light L can be displayed at each display position from a position P1 to a position P2000. The leftmost display position of the light L is the position P1. A higher number is assigned to a display position further to the right. Therefore, the rightmost display position of the light L is the position P2000. Each display position from the position P1 to the position P2000 is a position of the light L expressed by the light emitted from the LED 162B, and is different from a physical position where the LED 162B is disposed.

FIG. 6 is a diagram illustrating a relationship between each display position of the light L and a lighting pattern of the LEDs 162B. In FIG. 6, the leftmost LED 162B among the 20 LEDs 162B is indicated as "LED 1". A higher number is assigned to the LED 162B further to the right. Therefore, the rightmost LED 162B among the 20 LEDs 162B is indicated as "LED 20". In FIG. 6, a numerical value (0 to 100) indicates a luminance of the LED 162B. The luminance of 0 indicates a state in which the LED 162B is not turned on. The luminance of 100 indicates a state in which the LED 162B is turned on with the highest luminance.

Light emission of the LEDs 162B is controlled by the sub processor 10S. The sub processor 10S sequentially switches 2000 lighting patterns corresponding to the display positions from the position P1 to the position P2000 to control light emission of the 20 LEDs 162B. Hereinafter, reference signs LP1 to LP2000 are attached to the lighting patterns corresponding to the positions P1 to P2000, respectively.

That is, the sub processor 10S operates as the controller that controls the display position of the light L on the display section 166 by controlling the light source unit 162.

For example, the sub processor 10S turns on LEDs 1 to 3 with luminances of 51, 100, and 51, respectively, and does not turn on LEDs 4 to 20. That is, when the sub processor 10S performs light emission control with the lighting pattern LP1, the light L is projected at the position P1 which is the leftmost display position in the display region 168.

Next, the sub processor 10S gradually decreases the luminances of LED 1 and LED 3 by an extremely small amount. That is, when the sub processor 10S sequentially performs the light emission control with the lighting pattern LP2 and the subsequent lighting patterns, the display position of the light L gradually moves to the right (the positions P2, P3, P4, P5, P6, and the like).

It is possible to express smooth movement of the light L by gradually changing the luminances of the plurality of LEDs 162B.

The sub processor 10S sequentially switches the lighting pattern from the lighting pattern LP1 to LP2000 at high speed until the light L at the position P1 reaches the position P2000, and gradually shifts the LED 162B to be turned on to the LED 162B on the right side. As a result, as illustrated in FIG. 5, the display position of the light L moves from the position P1 to the position P2000 in a forward direction.

When the light L reaches the position P2000, the sub processor 10S sequentially switches the lighting pattern from the lighting pattern LP2000 to the lighting pattern LP1 at a high speed until the light L at the position P2000 reaches the position P1, and gradually shifts the LED 162B to be turned on to the LED 162B on the left side. As a result, as illustrated in FIG. 5, the display position of the light L moves from the position P2000 to the position P1 in a reverse direction.

As described above, the sub processor 10S continuously changes the display position of the light L such that the light L reciprocates on a linear track in the display region 168 (an example of the predetermined track on the display section). For convenience, the linear track is referred to as a "track ORB".

More specifically, the sub processor 10S performs the light emission control for the 20 LEDs 162B with a lighting pattern corresponding to each display position of the light L from one end (for example, one of the position P1 and the position P2000) to the other end (for example, the other of the position P1 and the position P2000) of the track ORB. The sub processor 10S sequentially switches the lighting pattern, continuously changes the display position of the light L from the one end to the other end, and then continuously changes the display position from the other end to the one end, thereby causing the light L to reciprocate on the track ORB.

In addition, the 20 LEDs 162B (an example of the plurality of light emitting elements) are arranged on a straight line corresponding to the track ORB on which the light L moves.

In the present embodiment, a large number (2000) of display positions are sequentially switched at a high speed. Since a movement resolution is high (a distance between adjacent display positions is short) and the display position is switched at a high speed, the light L appears to smoothly reciprocate in the display region 168.

An operation of the display unit 16 as the electronic metronome will be described in more detail.

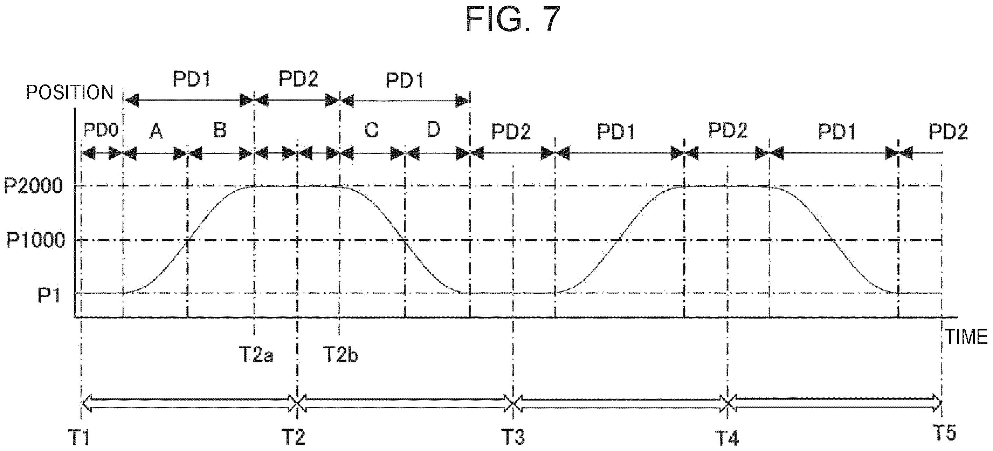

FIG. 7 is a diagram illustrating a relationship between the display position of the light L and time. In FIG. 7, T1 to T5 indicate timings of beats. Each period (a period from a beat timing T1 to a beat timing T2, a period from the beat timing T2 to a beat timing T3, a period from the beat timing T3 to a beat timing T4, and a period from the beat timing T4 to a beat timing T5) indicated by a bidirectional arrow has the same length and corresponds to a length of one beat. Periods PD0 and PD2 indicate periods during which the display position of the light L is stopped. A period PD1 indicates a period during which the display position of the light L moves.

As illustrated in FIG. 7, the light L repeatedly reciprocates according to the beat timing.

Specifically, when an electronic metronome function is turned on, the display position of the light L remains stopped at the position P1 and does not move during the first period PD0 starting from the beat timing T1.

In the period PD1, the display position of the light L moves from the position P1 toward the position P2000. The display position of the light L reaches the position P2000 at an end point of the period PD1.

The subsequent period PD2 is a period from a time point T2a (an example of a first time point) before the beat timing T2 to a time point T2b (an example of a second time point) after the beat timing T2. That is, the period PD2 includes the beat timing T2. The display position of the light L does not move and is stopped at the position P2000 during the period PD2.

A time from the first time point to the beat timing and a time from the beat timing to the second time point have, for example, the same length as the period PD0. The time from the first time point to the beat timing and the time from the beat timing to the second time point may have substantially the same length as the period PD0.

In the next period PD1, the display position of the light L moves from the position P2000 toward the position P1. The display position of the light L reaches the position P1 at the end point of the period PD1.

The subsequent period PD2 includes the beat timing T3. The display position of the light L does not move and is stopped at the position P1 during the period PD2.

In this manner, the light L reciprocates between the position P1 and the position P2000 according to the beat timing during a period from the timing T1 to the beat timing T3. As a result, the display position of the light L continuously changes according to the beat timing such that the light L reciprocates on the track ORB (an example of the predetermined track on the display section) in the display region 168 as illustrated in FIG. 5. The light L appears to smoothly reciprocate in the display region 168. The reciprocating motion is repeated while the electronic metronome function is turned on.

The display position of the light L is stopped at the position P1 and the position P2000 (an example of the both ends of the predetermined track) during a certain period including the beat timing, so that the user can easily grasp the movement range of the light (particularly, the ends of the movement range). The user can easily visually perceive the stop of the movement of the light L (in other words, visually perceive that the light L has reached the end of the movement range). The user can easily grasp the beat timing by visually perceiving a stop period of the light L including the beat timing.

The time from the first time point to the beat timing (for example, a time from the time point T2a to the beat timing T2) and the time from the beat timing to the second time point (for example, a time from the beat timing T2 to the time point T2b) have the same length or substantially the same length. By making the stop times of the light L before and after the beat timing have the same length or substantially the same length, the user can more intuitively grasp the beat timing.

A time of a first lighting pattern (for example, one of the lighting pattern LP1 and the lighting pattern LP2000) corresponding to the one end of the track ORB and a time of a second lighting pattern (for example, the other of the lighting pattern LP1 and the lighting pattern LP2000) corresponding to the other end of the track ORB are longer than times of other lighting patterns (for example, the lighting patterns LP2 to LP1999) corresponding to the display positions (for example, the positions P2 to P1999) of the light L between the one end and the other end (for example, the position P1 and the position P2000) of the track ORB.

That is, it is possible to cause the user to reliably perceive that the light L is stopped by increasing the time of the lighting pattern LP1 and the time of the lighting pattern LP2000. As a result, the user can easily grasp the beat timing. On the other hand, by decreasing the times of the other lighting patterns LP2 to LP1999, the display position of the light L is sequentially switched at a high speed, and it is possible to allow the user to see the light L smoothly moving in the display region 168.

The user can set a tempo of the electronic metronome by operating the operation panel 14. The length of the stop time (an example of the certain period) of the light L is set according to the tempo. Specifically, n% (for example, 20% or 40%) of a time taken for one beat is set as the stop time of the light L.

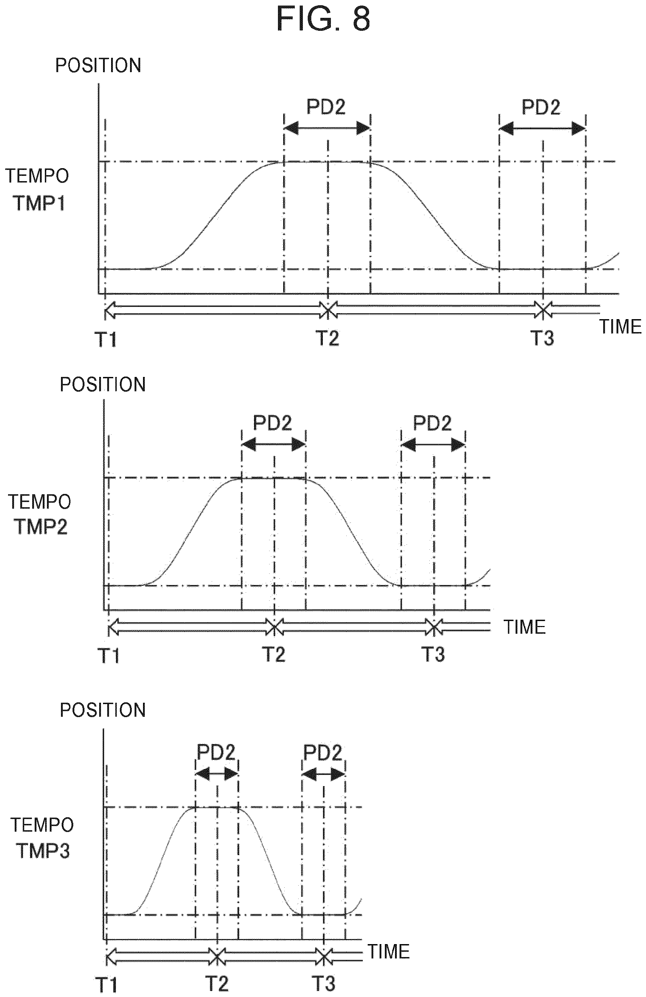

FIG. 8 is a diagram illustrating a relationship between the stop time of the light L (that is, the period PD2) and the tempo. The upper drawing, the middle drawing, and the lower drawing in FIG. 8 illustrate a relationship between the stop time of the light L and the tempo when the set tempo is a tempo TMP1, TMP2, or TMP3. Among the tempos TMP1 to TMP3, the tempo TMP1 is the slowest tempo and the tempo TMP3 is the fastest tempo. The tempo TMP2 is a tempo slower than the tempo TMP3 and faster than the tempo TMP1. Furthermore, similarly to the example of FIG. 7, the periods (the period from the beat timing T1 to the beat timing T2 and the period from the beat timing T2 to the beat timing T3) indicated by the bidirectional arrows have the same length and each correspond to the length of one beat.

As illustrated in FIG. 8, the faster the tempo (in other words, the shorter the time taken for one beat), the shorter the stop time of the light L (that is, the period PD2). The slower the tempo (in other words, the longer the time taken for one beat), the longer the stop time of the light L.

As described above, by setting a ratio of the stop time of the light L to the time taken for one beat to be constant (for example, 20% at all times) regardless of the tempo, it is possible to give a sense of unity to a display form of the electronic metronome.

A pendulum motion of a pendulum metronome gradually accelerates from one end of a pendulum range and then gradually decelerates after passing a midpoint and is stopped at the other end of the pendulum range for a moment in a forward direction. The pendulum motion of the pendulum metronome gradually accelerates toward the one end of the pendulum range and then gradually decelerates after passing the midpoint and is stopped at the one end of the pendulum range for a moment in a reverse direction. The pendulum metronome repeats such reciprocating movement according to the beat timing.

In order to imitate the pendulum motion of the pendulum metronome with high reproducibility, it is desirable to move the display position of the light L according to a sine wave. However, in control according to the sine wave, a processing load of the sub processor 10S becomes excessively large.

Therefore, in the present embodiment, the sub processor 10S moves the display position of the light L by control according to a quadratic function.

Specifically, as illustrated in FIG. 7, in the forward direction, the sub processor 10S moves the display position of the light L from the one end (for example, the position P1) of the track ORB to a midpoint (for example, the position P1000) of the track ORB while quadratically accelerating the movement (see a period A in FIG. 7), and moves the display position of the light L from the midpoint to the other end (for example, the position P2000) of the track while quadratically decelerating the movement (see a period B in FIG. 7).

In addition, as illustrated in FIG. 7, in the reverse direction, the sub processor 10S moves the display position of the light L from the other end (for example, the position P2000) of the track ORB to the midpoint (for example, the position P1000) of the track ORB while quadratically accelerating the movement (see a period C in FIG. 7), and moves the display position of the light L from the midpoint to the one end (for example, the position P1) of the track while quadratically decelerating the movement (see a period D in FIG. 7).

A quadratic function applied to the period A is expressed by the following Equation (1). Position P(t) - Position P1 = (2 × (Position P2000 - Position P1)/T2) × t2

Reference sign T represents a time taken for the light L to move between the position P1 and the position P2000 (in other words, the period PD1). Reference sign t indicates an elapsed time. For convenience of calculation, the elapsed time t indicates a time excluding the stop time of the light L (in other words, the period PD0 and the period PD2), that is, an elapsed time of only a movement time of the light L (in other words, the period PD1). The elapsed time t is reset to 0 when the display position of the light L returns from the position P2000 to the position P1. In Equation (1), the elapsed time t has a value of 0 ≤ t < T/2. The position P(t) indicates the display position of the light L corresponding to the elapsed time t.

A quadratic function applied to the period B and the period C is expressed by the following Equation (2). Position P(t) - Position P2000 = (-2 × (Position P2000 - Position P1)/T2) × (t-T)2

In Equation (2), during the period B, the elapsed time t has a value of T/2 ≤ t < T. In Equation (2), during the period C, the elapsed time t has a value of T ≤ t < 3T/2.

A quadratic function applied to the period D is expressed by the following Equation (3). Position P(t) - Position P1 = (2 × (Position P2000 - Position P1)/T2) × (t - 2T)2

In Equation (3), during the period D, the elapsed time t has a value of 3T/2 ≤ t < 2T.

When the elapsed time t reaches a time 2T, the sub processor 10S resets the elapsed time t to 0. In the next periods PD1 and PD2, the sub processor 10S sequentially applies Equations (1) to (3) again.

By moving the display position of the light L by the control according to the quadratic function, it is possible to imitate the pendulum motion of the pendulum metronome with high reproducibility as in the case of the sine wave.

In addition, by performing the control according to the quadratic function, the processing load of the sub processor 10S can be reduced as compared with the case of performing the control according to the sine wave.

In addition, by performing the control according to the quadratic function, the time taken for the light L to move from the one end (for example, the position P1) to the other end (for example, the position P2000) of the track ORB is shortened as compared with the case of performing the control according to the sine wave. Since the time taken for the light L to move in the time taken for one beat is shortened, a longer stop time (in other words, the period PD2) of the light L can be secured. Therefore, it is possible to allow the user to reliably perceive that the light L is stopped. As a result, the user can easily grasp the beat timing.

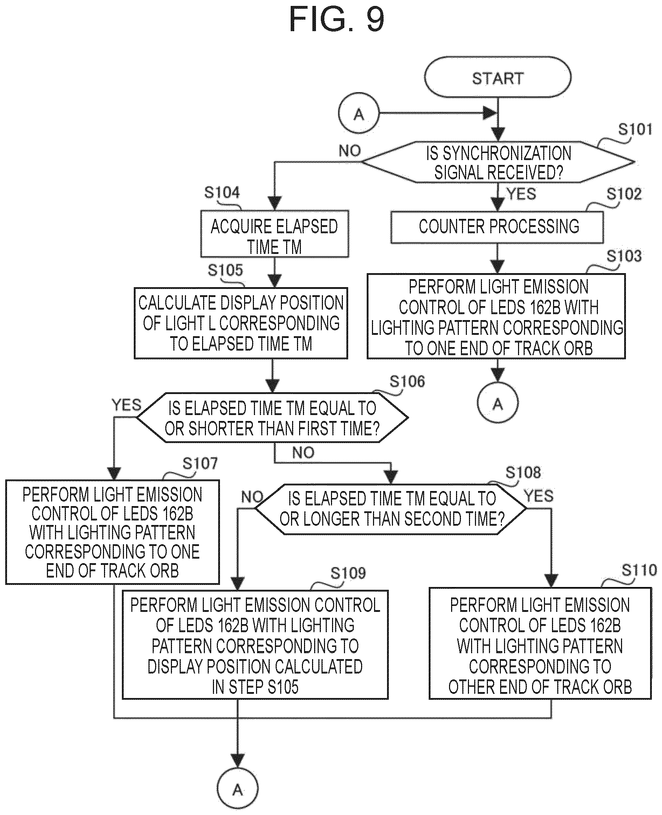

FIG. 9 is a flowchart illustrating metronome processing executed by the sub processor 10S in an embodiment of the present invention. For example, when a user operation of turning on the electronic metronome function is performed on the operation panel 14, execution of the metronome processing illustrated in FIG. 9 is started.

When the electronic metronome function is turned on, the main processor 10M transmits a synchronization signal to the sub processor 10S at a timing corresponding to the set tempo (in other words, every time the beat timing comes), and at the same time, causes the speaker 20 to output a sound for notifying of a beat.

The set tempo is a tempo set by a user operation performed on the operation panel 14. In a case where the user operation is not performed, the set tempo is an initially determined tempo.

As illustrated in FIG. 9, the sub processor 10S waits for the synchronization signal from the main processor 10M (step S101).

In a case where the synchronization signal is received from the main processor 10M (step S101: YES), the sub processor 10S resets a count value of a built-in counter and starts counting at the same time (step S102). The sub processor 10S performs the light emission control of the LEDs 162B with a lighting pattern (for example, the lighting pattern LP1) corresponding to the one end (for example, the position P1) of the track ORB (step S103), and returns to the processing of step S101.

Strictly speaking, the beat timing (such as T1 or T2) illustrated in FIGS. 7 and 8 is a timing at which the sub processor 10S receives the synchronization signal. A synchronization signal reception timing may be appropriately adjusted in consideration of a signal delay in the sub processor 10S.

In a case where the synchronization signal is not received from the main processor 10M (step S101: NO), the sub processor 10S acquires an elapsed time TM (in other words, the count value of the built-in counter) from the last reception of the synchronization signal (step S104).

The sub processor 10S selects any one of Equations (1) to (3) above according to the elapsed time TM, and calculates the display position of the light L corresponding to the elapsed time TM acquired in step S104 by using the selected Equation (step S105).

In step S105, the display position of the light L is calculated after the elapsed time TM is converted into the elapsed time t. For example, the elapsed time TM is converted to 0 at a time point at which the movement starts from the position P1. The elapsed time TM is converted into a time T at a time point at which the synchronization signal is received. The elapsed time TM is converted into the time 2T at a time point at which the display position of the light L returns to the position P1.

The sub processor 10S determines whether or not the elapsed time TM acquired in step S104 is equal to or shorter than a first time (step S106). The first time is, for example, the half of the period PD2 during which the light L is stopped. That is, the sub processor 10S determines whether or not an elapsed time from the beat timing T1 is within the period PD0, and determines whether or not an elapsed time from a beat timing Tn (n is a natural number of 2 or more) after the beat timing T2 is within the period PD2.

In a case where the elapsed time TM is equal to or shorter than the first time (step S106: YES), only a little time has elapsed from the beat timing. Therefore, the sub processor 10S maintains the light emission control of the LEDs 162B with the lighting pattern (for example, the lighting pattern LP1) corresponding to the one end (for example, the position P1) of the track ORB (step S107), and returns to the processing of step S101.

In a case where the elapsed time TM exceeds the first time (step S106: NO), the sub processor 10S determines whether or not the elapsed time TM acquired in step S104 is equal to or longer than a second time (step S108). For example, the second time is obtained by adding a time of the entire period PD1 to the first time (that is, the half of the period PD2).

In a case where the elapsed time TM is shorter than the second time (step S108: NO), there is still time until the next beat timing, and the light L has not reached the other end (for example, the position P2000) of the track ORB. Therefore, the sub processor 10S performs the light emission control of the LEDs 162B with the lighting pattern (any of the lighting patterns LP2 to LP1999) corresponding to the display position calculated in step S105 (step S109), and returns to the processing of step S101.

In a case where the elapsed time TM is equal to or longer than the second time (step S108: YES), the next beat timing is near, and the light L has reached the other end (for example, the position P2000) of the track ORB. Therefore, the sub processor 10S performs the light emission control of the LEDs 162B with the lighting pattern (for example, the lighting pattern LP2000) corresponding to the other end (for example, the position P2000) of the track ORB (step S110), and returns to the processing of step S101.

As described above, the sub processor 10S executes the metronome processing of moving the light L from the position P1 to the position P2000 with the position P1 as the one end of the track ORB and the position P2000 as the other end of the track ORB. After the processing of step S110, the sub processor 10S returns to step S101, and when the synchronization signal is received, the sub processor 10S then executes the metronome processing of moving the light L from the position P2000 to the position P1 with the position P2000 as the one end of the track ORB and the position P1 as the other end of the track ORB, similarly to the above description.

The sub processor 10S repeatedly executes the metronome processing illustrated in FIG. 9, for example, until the electronic metronome function is turned off. In other words, when the electronic metronome function is turned off, the sub processor 10S ends the execution of the metronome processing illustrated in FIG. 9.

By the execution of the metronome processing illustrated in FIG. 9, the display position of the light L is stopped at the position P1 and the position P2000, which are the ends of the movement range of the light L, for a certain period before and after the beat timing. The user can easily grasp the beat timing by visually perceiving a stop period of the light L including the beat timing.

When the main processor 10M transmits the synchronization signal to the sub processor 10S at the beat timing, the sub processor 10S receives the synchronization signal and performs the light emission control of the LEDs 162B. Therefore, a delay occurs from the beat timing until the light emission control using the corresponding lighting pattern (the lighting pattern LP1 or the lighting pattern LP2000) is performed.

Therefore, the sub processor 10S performs the light emission control of the LEDs 162B with the corresponding lighting pattern (the lighting pattern LP1 or the lighting pattern LP2000) from slightly before the beat timing. In other words, the light L is stopped slightly before the beat timing. Therefore, the user does not feel a delay, and perceives that the stop timing of the light L matches the beat timing.

The light L gradually decelerates so as to imitate the pendulum motion of the pendulum metronome slightly before the beat timing (in other words, slightly before the light L is stopped). By visually recognizing the deceleration of the light L, the user can grasp in advance that the beat timing is about to arrive. Also from this point, the user can more easily grasp the beat timing.

The light L gradually accelerates from the one end (stop state) of the track ORB, and then gradually decelerates after passing the midpoint and reaches the other end of the track ORB to stop. As described above, in the present embodiment, the light L performs a motion imitating the pendulum motion of the pendulum metronome. Also from this point, the user can more easily grasp the beat timing.

In addition, the present invention is not limited to the above-described embodiments, and various modifications can be made in the implementation stage without departing from the gist thereof. Furthermore, the functions executed in the above-described embodiments may be appropriately combined and implemented as much as possible. The above-described embodiments include various stages, and various inventions can be extracted by appropriate combinations of a plurality of disclosed constituent elements. For example, even if some components are deleted from all the components shown in the embodiment, if an effect can be obtained, a configuration from which the components are deleted can be extracted as an invention.

## Claims

1. A display control device (1) comprising:
a controller (10S) that controls a light source unit (162), wherein
the controller (10S):
changes a display position of light such that the light emitted from the light source unit (162) and projected on a display section repeatedly reciprocates on a predetermined track on the display section according to a beat timing, and
stops the display position of the light at positions corresponding to both ends of the track during a certain period including the beat timing.

2. The display control device (1) according to claim 1, wherein
the controller (10S) stops the display position of the light during a period from a first time point before the beat timing to a second time point after the beat timing.

3. The display control device (1) according to claim 1, wherein
the light source unit (162) includes a plurality of light emitting elements (162B), and
the controller (10S):
performs light emission control of the plurality of light emitting elements (162B) with a lighting pattern corresponding to each display position from one end of the track to the other end of the track, and
continuously changes the display position of the light from the one end to the other end by sequentially switching the lighting pattern, and continuously changes the display position of the light from the other end to the one end, so as to cause the light to reciprocate on the track.

4. The display control device (1) according to claim 3, wherein
the controller (10S) makes a time of each of a first lighting pattern corresponding to the one end of the track and a second lighting pattern corresponding to the other end of the track longer than a time of each of other lighting patterns corresponding to the display positions between the one end of the track and the other end of the track.

5. The display control device (1) according to claim 3, wherein
the track is a linear track, and
the plurality of light emitting elements (162B) are arranged on a straight line corresponding to the track.

6. The display control device (1) according to any one of claims 3 to 5, wherein
the light emitting element is a light emitting diode (LED) (162B).

7. The display control device (1) according to claim 1, wherein
the controller (10S) sets a length of the certain period according to a tempo.

8. The display control device (1) according to claim 1, wherein
the controller (10S):
moves the display position of the light from the one end of the track to a midpoint of the track while quadratically accelerating the movement, and then moves the display position of the light from the midpoint to the other end of the track while quadratically decelerating the movement, in a forward direction, and
moves the display position of the light from the other end to the midpoint while quadratically accelerating the movement, and then moves the display position of the light from the midpoint to the one end while quadratically decelerating the movement, in a reverse direction.

9. A display device (1) comprising:
the display control device (1) according to claim 1;
the light source unit (162); and
the display section on which the light emitted from the light source unit (162) is projected.

10. A method executed by a computer including a processor that controls a light source unit (162), the method comprising:
changing a display position of light such that the light emitted from the light source unit (162) and projected on a display section repeatedly reciprocates on a predetermined track on the display section according to a beat timing; and
stopping the display position of the light at positions corresponding to both ends of the track during a certain period including the beat timing.

11. The method according to claim 10, wherein
the display position of the light is stopped during a period from a first time point before the beat timing to a second time point after the beat timing.

12. The method according to claim 10, wherein
the track is a linear track,
the light source unit (162) includes a plurality of light emitting elements (162B), the plurality of light emitting elements (162B) being arranged on a straight line corresponding to the track, and
the processor:
performs light emission control of the plurality of light emitting elements (162B) with a lighting pattern corresponding to each display position from one end of the track to the other end of the track, and
continuously changes the display position of the light from the one end to the other end by sequentially switching the lighting pattern, and continuously changes the display position of the light from the other end to the one end, so as to cause the light to reciprocate on the track.

13. A non-transitory recording medium that stores a program for causing a computer configured to control a light source unit (162) to execute:
changing a display position of light such that the light emitted from the light source unit (162) and projected on a display section repeatedly reciprocates on a predetermined track on the display section according to a beat timing; and
stopping the display position of the light at positions corresponding to both ends of the track during a certain period including the beat timing.

14. The recording medium according to claim 13, wherein
the display position of the light is stopped during a period from a first time point before the beat timing to a second time point after the beat timing.

15. The recording medium according to claim 13, wherein
the track is a linear track,
the light source unit (162) includes a plurality of light emitting elements (162B), the plurality of light emitting elements (162B) being arranged on a straight line corresponding to the track,
light emission control of the plurality of light emitting elements (162B)is performed with a lighting pattern corresponding to each display position from one end of the track to the other end of the track, and
the display position of the light is continuously changed from the one end to the other end by sequentially switching the lighting pattern, and is continuously changed from the other end to the one end, so as to cause the light to reciprocate on the track.
